# EUROPEAN PATENT SPECIFICATION

(11) **EP 0 420 280 B1**
(45) Date of publication and mention of the grant of the patent: **21.08.1996**
(21) Application number: 90118730.2
(22) Date of filing: 28.09.1990
(51) Int. Cl.: G11B 20/10, G11B 20/18, G11B 20/12, G11B 27/00, G11B 27/02, H04N 5/783

(54) **Digital information signal reproducing apparatus for reproducing digital audio signal at the reproducing speed different from the recording speed**
Gerät zur Wiedergabe von digitalen Informationssignalen für die Wiedergabe von digitalen Audiosignalen mit einer von der Wiedergabegeschwindigkeit abweichenden Aufnahmegeschwindigkeit
Appareil de reproduction de signaux d'information numérique pour reproduire le signal audio numérique à une vitesse de reproduction différente de la vitesse d'enregistrement

(30) Priority: 29.09.1989 JP 256203/89; 21.11.1989 JP 302756/89
(43) Date of publication of application: 03.04.1991
(73) Proprietor: SONY CORPORATION, Tokyo (JP)
(72) Inventor: Koishikawa, Yoshinori c/o Sony Corporation, Tokyo (JP); Chiba, Nobuhiro c/o Sony Corporation, Tokyo (JP); Asato, Yoichiro c/o Sony Corporation, Tokyo (JP)
(74) Representative: Schmidt-Evers, Jürgen, Dipl.-Ing.

(56) References cited:
- EP-A- 0 371 717
- WIRELESS WORLD no. 1580, May 1984, OLCHESTER, GB pages 55 - 58; J.R.WATKINSON: 'Variable-speed video playback'
- SMPTE JOURNAL vol. 97, no. 3, March 1988, WHITE PLAINS,NY, USA pages 182 - 193; R.BRUSH: 'Design Considerations for the D-2 NTSC Composite DVTR'
- FERNSEH- UND KINO-TECHNIK vol. 38, no. 7, July 1984, pages 281 - 286; J.HEITMANN: 'Digitale Videoaufzeichnung Grundlagen. Standardisierung. Entwicklung'
- PATENT ABSTRACTS OF JAPAN vol. 9, no. 170 (P-373)16 July 1985 & JP-A- 60 047 268
- PATENT ABSTRACTS OF JAPAN vol. 12, no. 307 (P-747)22 August 1988 & JP-A-63 076 158

## Description

The present invention relates to a digital information signal reproducing apparatus applicable to an audio signal processing of digital VTR which records/reproduces digital video signal and digital audio signal.

For one of digital VTRs which record/reproduce a composite digital color video signal and a digital audio signal, there is a digital VTR based on D-2 format which was authorized by SMPTE(Society of Motion Picture and Television Engineerings). Such a format is disclosed in SMPTE JOURNAL, vol. 97, no. 3, March 1988, WHITE PLAINS, USA, NY, on pages 55-58. According to this digital VTR, a digital audio signal is doubly recorded; same digital audio signal is recorded on which one of different track. In such a digital VTR, a reproduced first audio data (called "first copy") and a second digital audio data (called "second copy") are separately decoded and output, and the decoding is made up using both of the first copy ana the second copy. Specifically, since the same data is doubly recorded as the first copy and the second copy, data having no error is selected from the first copy and the second copy by referring to an error flag provided by inner code decoding to construct a code block of outer codes. With respect to this code block, the correction of the outer codes is made. The improvement of error correction can be achieved consequently.

In such a digital VTR, variable speed reproduction in which the tape speed is different from that at the time of normal mode is possible. At the time of the variable speed reproduction, a scanning trace of a rotary head does not come to coincide with an inclination of a track. However, in the case of above several times the tape speed at the time of normal mode, the rotary head is deviated by piezoelectric elements in the height direction so that the scanning trace of the rotary head coincides with the track. Such a tracking technique is called "dynamic tracking".

At the time of variable speed reproduction, for example, at the time of double speed reproduction, the rotary head scans a track on which one field signal is recorded, by dynamic tracking. The head jumps then a track on which the next one field signal is recorded and scans a track on which records another next one field signal is recorded. With this track jump, the contents of the audio data of the first copy do not come to coincide with those of the audio data of the second copy. Consequently, erroneous error correction processing is made if the decoding by the use of the first copy and the second copy is done depending on an error state in a manner similar to the one in the normal reproduction.

To avoid the erroneous correction processing, only the audio data of any one of the first copy and the second copy is used as a reproduced output at the time of variable speed reproduction. As a result, there is a problem that error correction capability is lowered as compared with that in the normal reproduction.

From EP-A-0 371 717, which is to be regarded as state of the art according to Art. 54(3) EPC, an apparatus for reproducing digital audio and video data is known, whereby digital audio and video signals are recorded on successive oblique tracks formed on a video tape, and reproduced therefrom by reproducing heads which can be movable in a direction transverse to the tracks by means of a bimorph device so that at least a plurality of tracks including one field of video an audio signals are skipped in a variable tape speed mode. Track portions provided for the audio signal are arranged at both ends of the video tracks. In a mode in which the read head skips a field the signal level of the audio signal reproduced from one end portion of the audio tracks is gradually reduced at an end of tracking by the head, while the signal level of the audio signal reproduced from other end portion of a new field track portion is gradually increased so that a cross-fade function can be performed. In contrast to the subject matter of the present application the D.T. control circuit of this document directly outputs a track jump control signal whereby the change over process from gain 0 to gain 1 and gain 1 to gain 0, respectively, of gain control amplifyers lasts as long as the track jump control signal is switched or set on "low".

An object of the present invention, therefore, is to provide a digital information signal reproducing apparatus capable of preventing the degradation of error correction capability at the time of variable speed reproduction.

Another object of the present invention is to provide a digital information signal reproducing apparatus capable of correctly detecting whether the rotary magnetic head jumps the tracks and processing the reproduction state between the first and second digital audio signals depending on the detection result, lowering greatly noise occurring in the switching period of the first and second digital audio signal and smoothing the reproduction state.

In order to accomplish the above objects, according to the invention, there is provided a digital information signal reproducing apparatus having a rotary head for reproducing digital signals from sequentially arranged tracks on a recording medium, having a first, normal speed reproduction mode in which said recording medium is driven at a normal speed for reproducing a first pair of digital audio signals each of which has the same contents and is recorded on a respective one of two oblique tracks which are close to each other on said recording medium and a second, variable speed reproduction mode in which the recording medium is run at a speed different from said normal speed,
whereby head position control means control a scanning position of said rotary head so that the latter scans said tracks during said second variable speed reproduction mode for causing said rotary head to periodically jump over a plurality of the tracks such that at each head jump a second pair of digital audio signals each including different data are consequently generated in place of said first pair of digital audio signals;
whereby one signal of said second pair of digital audio signals corresponds to a signal of the said first pair of digital audio signals which would have been generated if no head jump had occurred,
detecting means detect when said rotary head controlled by said head position control means jumps over a plurality of said tracks; and
processing means switch from said one signal of said second pair of digital audio signals to the other one signal of said second pair of digital audio signals upon initiation by a detection signal of said detecting means, thereby generating the said digital signals reproduced by said apparatus.

The above, and other, objects, features and advantages of the present invention will become readily apparent from the following detailed description thereof which is to be read in connection with the accompanying drawings.

Fig. 1 is a block diagram showing a structure on the recording side of a digital VTR to which the present invention can be applied;
Fig. 2 is a block diagram showing a structure on the reproducing side of the digital VTR to which the present invention can be applied;
Fig. 3 is a plan view showing a scanner;
Fig. 4A, 4B is a diagram showing a format on a tape of the digital VTR;
Fig. 5 is a diagram showing a sync block format;
Fig. 6 is a diagram showing a block arrangement of audio data;
Fig. 7A-7C is a diagram showing a variable speed reproduction operation;
Fig. 8 is a block diagram showing a main part of one embodiment of the present invention;
Fig. 9 is a block diagram showing a main part of another embodiment of the present invention;
Figs. 10 and 11 are diagrams showing a variable speed reproduction operation;
Fig. 12A-12C is a diagram showing 4-channel audio data;
Fig. 13A-13C is a diagram showing 1-channel audio data; and
Fig. 14 is a diagram showing a sector ID.

One embodiment applied to a reproduction of audio data of a digital VTR will be explained referring to drawings.

The explanation is made in the following order:
A. Recording circuit and reproducing circuit of digital VTR
B. Scanner and track format
C. Variable speed reproduction operation
D. Data processing at the time of variable speed reproduction
E. Another embodiment

### A. Recording circuit and reproducing circuit of digital VTR

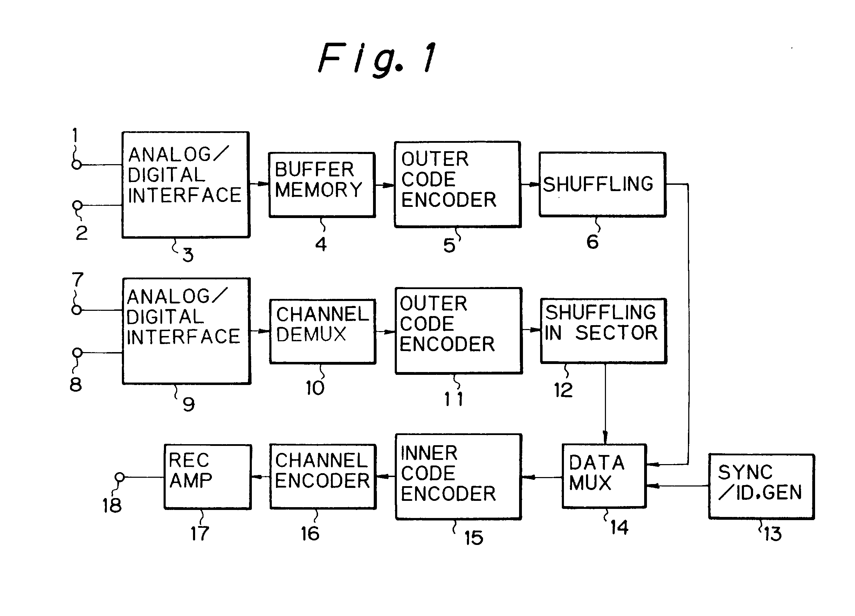

Fig. 1 shows an entire structure on the recording side of a digital VTR to which this invention can be applied. In Fig. 1, reference nuemral 1 is an input terminal for an analog audio signal, 2 is an input terminal for a digital audio signal, and 3 is an analog/digital interface. A buffer memory 4 is connected to the interface 3. The time base of the audio data is compressed by the buffer memory 4, and the data is converted into the order of a block structure. 5 is an outer code encoder and 6 is a shuffling circuit. Encoding of outer codes which are error correction codes is done by the outer code encoder 5. The shuffling circuit 6 is composed of a memory to perform the rearrangement of data order.

7 is an input terminal for an analog video signal, 8 is an input terminal for a digital video signal, and 9 is an analog/digital interface. The output signal of the interface 9 is supplied to a channel demultiplexer 10 and converted into 2-channel data sequences. Each of the data sequence of the 2-channel is supplied to an outer code encoder 11 and subjected to encoding process of the outer code. The output data of the encoder 11 is supplied to a shuffling circuit 12 in a sector for rearrangement of the data order in the sector.

The audio data from the shuffling circuit 6, the video data from the shuffling circuit 12 in the sector, and a synchronization signal and an ID signal from a synchronization and ID generating circuit 13 are given to a data multiplexer 14. The output signal of the data multiplexer 14 is fed to an inner code encoder 15. An encoding process of inner codes is made by the inner code encoder 15. The output signal of the inner code encoder 15 is supplied to a channel encoder 16 and subjected to the encoding process of M² code. The output signal of the channel encoder 16 is output through a recording amplifier 17 at an output terminal 18.

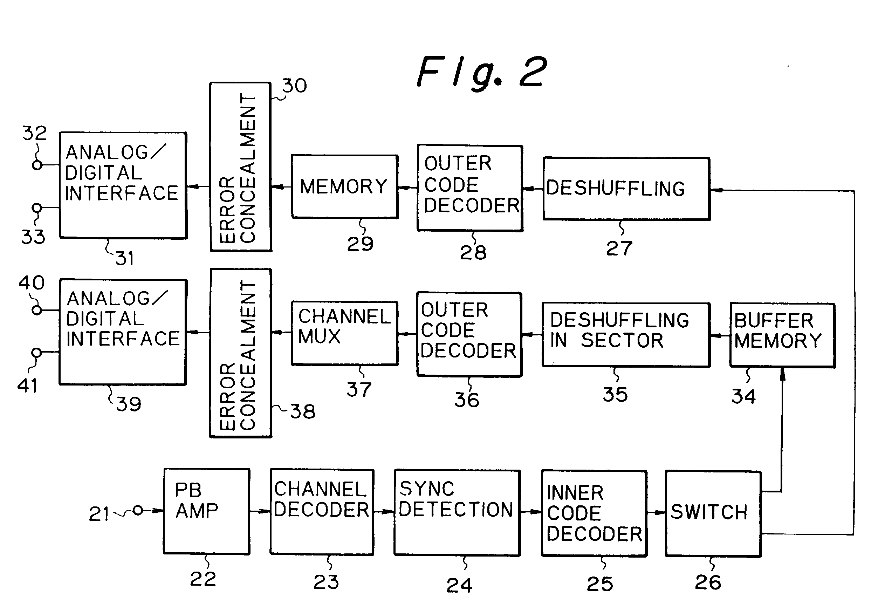

A rotary head is connected to the output terminal 18. Recording data is recorded onto a magnetic tape by the rotary head. A reproduced data from the magnetic tape by a rotary head is supplied from san input terminal 21 in Fig. 2 to a reproduction amplifier 22. The output signal of the reproduction amplifier 22 is given to a channel decoder 23 and subjected to M² code decoding.

The output signal of the channel decoder 23 is fed to a synchronization detector 24 for the detection of a synchronization signal. The output signal of the synchronization detector 24 is supplied to an inner code decoder 25, and inner code decoding is made. The output signal of the inner code decoder 25 is supplied to a switch circuit 26, and an audio data and a video data are separated.

The audio data is given to an outer code decoder 28 after it is deshuffled by a deshuffling circuit 27. Outer code decoding is done at the outer code decoder 28 and written into a memory 29. The outer code decoding is, for example, erasure correction by referring to an error flag generated at the inner code decoding. The time base expansion of data made by the memory 29. Audio data read out of the memory 29 is supplied to an error concealment circuit 30 for error data concealment. The output data of the error concealment circuit 30 is given to an analog/audio interface 31. An analog audio signal is provided at an output terminal 32, and a digital audio signal is obtained at an output terminal 33.

A video data separated at the switch circuit 26 is written into a buffer memory 34. The video data read out of the buffer memory 34 is supplied to an outer code decoder 36 through a deshuffling circuit 35 in a sector. The data subjected to error correction from the outer code decoder 36 is supplied to a channel multiplexer 37 with the result that a 2-channel data is converted into a 1-channel data. The output signal of the channel multiplexer 37 is fed to an error concealment circuit 38 for the concealment of error data. The output signal of the error concealment circuit 38 is supplied to an analog/digital interface 39. An analog video signal is produced at an output terminal 40, and a digital video signal is provided at an output terminal 41.

### B. Scanner and track format

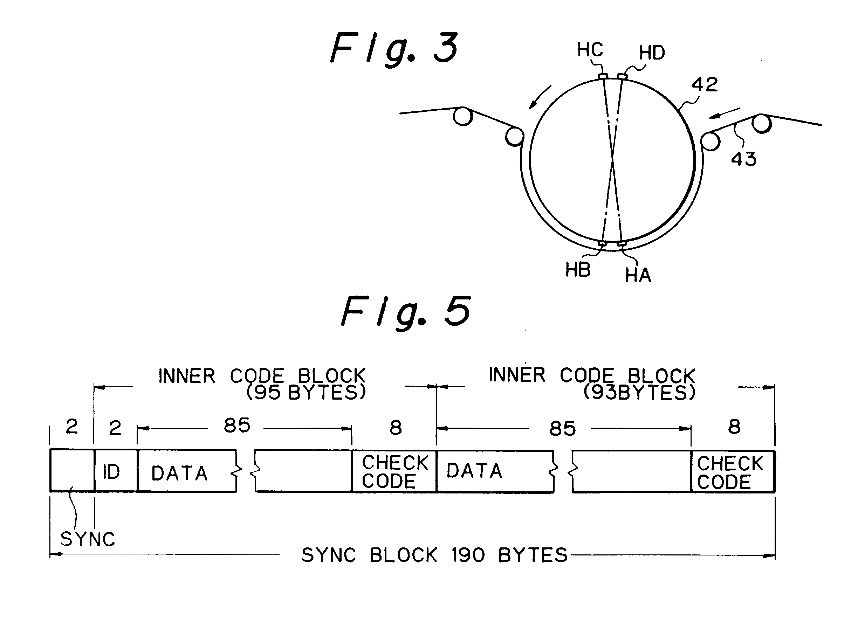

Fig. 3 shows one example of a scanner of a digital VTR. Four head chips HA to HD are attached to a drum 42 rotating toward the direction of an arrow. The head chips HA and HB are close to each other, and the head chips HC and HD are close to each other. The head chips HA and HC are opposed with spacing of 180° and the head chips HB and HD are opposed with spacing of 180° . A magnetic tape 43 is obliquely wound on a peripheral surface of the drum 42 with a wrap angle slightly wider than 180° . The set of the head chips HA and HB and the set of the head chips HC and HD alternately have a sliding contact with the magnetic tape 43. The gap angles of the head chips HA and HB are made different, and the gap angles of the head chips HC and HD are similarly made different to perform azimuth recording. A reproduction signal provided by multiplexing the reproduction signals of the head chips HA and HC having the same azimuth angle is formed, and a reproduction signal provided by multiplexing the reproduction signals of the head chips HB and HD is formed similarly.

The head chips HA and HB are provided at one end of a supporting plate consisting of two plate-like piezoelectric elements, and the head chips HC and HD are provided at one end of a similar supporting plate. The supporting plate deviates the head chips in the height direction by the amount depending on a driving voltage. For example, when the reproduction is done by the tape speed set in the range of (-1 to +3) [sign represents the running direction of the magnetic tape 43, and +1 means the tape speed at the time of normal reproduction], the driving voltage for the piezoelectric elements is generated depending on the tape speed by a microcomputer, etc. As a result, the head chips HA to HD scan the tracks formed on the magnetic tape 43 correctly.

In the case of a video signal with the field frequency of 60 Hz in the NTSC system, one field is divided into three segments, and one segment is recorded as two tracks, and one segment is recorded as two tracks. Clearly, the video signal of one field is recorded on the magnetic tape 43 as six tracks of three segments.

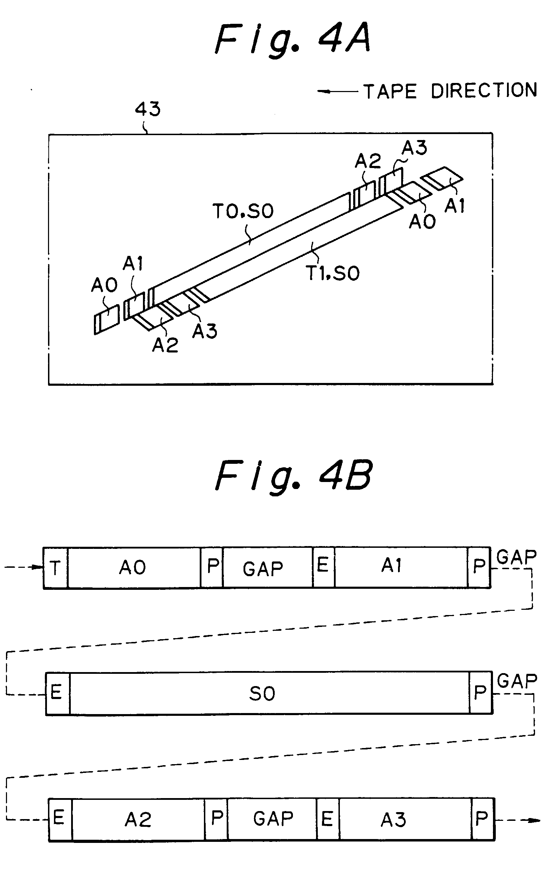

Fig. 4A and Fig. 4B show a track format formed on the magnetic tape 43. Fig. 4A shows a track pattern viewed from the magnetic surface side, while Fig. 48 shows one track illustrated in the order of head scanning. A0, A1, A2 and A3 indicate audio sectors, respectively, and these audio sectors A0 to A3 are arranged on the end portions of the track. A0 to A3 are first, second, third and fourth channel data. Also, the same contents of the audio data are recorded twice at separate ends of the two tracks. Namely, the audio data of the same contents is recorded at the end portion on the head-leaving side of a previous track and at the end portion on the head entering side of the present track, respectively. The first audio data recorded at the end portion on the head-leaving side is called "the first copy", while the second audio data recorded at the end portion on the head-entering side is called "the second copy". A video sector lies in the central portion of the tracks. T0 and T1 are track numbers, and S0 is a segment number.

As shown in Fig. 48, gaps for editing are provided between audio sectors and between the audio sector and the video sector. The audio sectors A0 to A3 are composed of six sync blocks, respectively, and the video sector consists of 204 sync blocks. In Fig. 48, T indicates a track preamble, E indicates an editing gap preamble, and P indicates a post preamble.

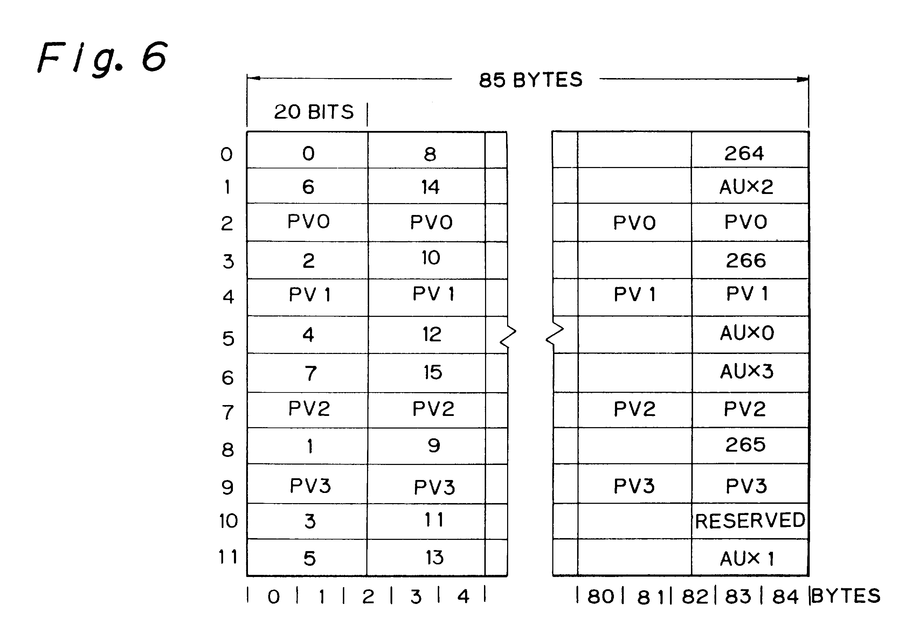

As shown in Fig. 5, each sync block has a length of 190 bytes, and a synchronization pattern of two bytes is added to the head of each block. A two-byte ID pattern which is an identification signal (ID signal) is then added, and inner code encoding is done for the ID pattern and 85-byte data to form an eight-byte check code. Additionally, an eight-byte check code is added to other 85-byte data to construct an inner code block.

The inner code is common to the audio data and the video data. For the inner code and the outer code, the Reed Solomon codes are used. The number of samples of the audio data recorded on each audio sector is 266 or 267. Fig. 6 shows a block structure contained in one audio sector.

In Fig. 6, numerals 0 to 266 indicate audio sample numbers, PV0 to PV3 indicate check codes for outer codes, and AUX0 to AUX3 indicate auxiliary words. These audio data, check codes and auxiliary words have been shuffled. In Fig. 6, illustration of check codes for inner codes is omitted. Although the bit length of one sample of the audio data is 20 bits, the inner code encoding is done by handling one byte as one symbol. Plural bytes, which are arranged in the longitudinal direction of the arrangement shown in Fig. 6, construct a block. As a result, one sector is made up of 85 outer code blocks.

### C. Variable speed reproduction operation

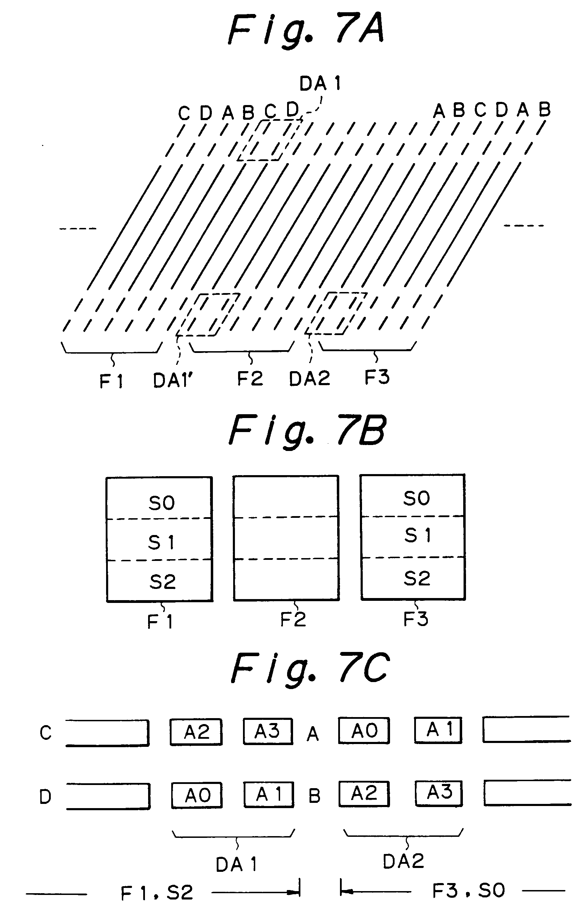

Referring to Fig. 7, the variable speed reproduction operation will be explained. The above-mentioned track format is indicated in Fig. 7A. Reference symbols A to D in Fig. 7A mean tracks scanned by the head chips HA to HD. At the time of variable speed reproduction, for example, at the time of double speed reproduction, three segments (six tracks) on which a field F1 is recorded by the dynamic tracking control are reproduced by the head chips HA to HD in a manner similar to the case of normal reproduction. With the completion of the reproduction of the field F1, six tracks on which signals of the next field F2 are recorded are jumped so that the tracks on which signals of a field F3 next to the field F2 are recorded are reproduced. As a result, as shown in Fig. 7B, reproduction data of the field F3 is obtained at the time of double speed reproduction after the field F1. In Fig. 78, S0, S1 and S2 indicate first, second and third segments of each field,

When the attention is paid to before and after the track jump, as shown in Fig. 7A, a first copy DA1 is recorded at the end portion on the head-leaving side of the track of the field F1, and a second copy DA1′ is recorded at the end portion on the head-entering side of the track of the next field F2. The first copy DA1 and the second copy DA1′ are the identical audio data. However, since the field F2 is not reproduced, a second copy DA2 of the field F2 over which a jump has been made is reproduced as the second copy for providing a pair with the first copy DA1. Needless to say, the second copy DA2 is different data from the first copy DA1.

As a result, in this embodiment, in a joint of the fields where the first copy and the second copy are different data, a cross fading process is performed, and in a period where the first copy and the second copy are identical data, the decoding process similar to that in the normal reproduction is done.

### D. Data processing at the time of variable speed reproduction

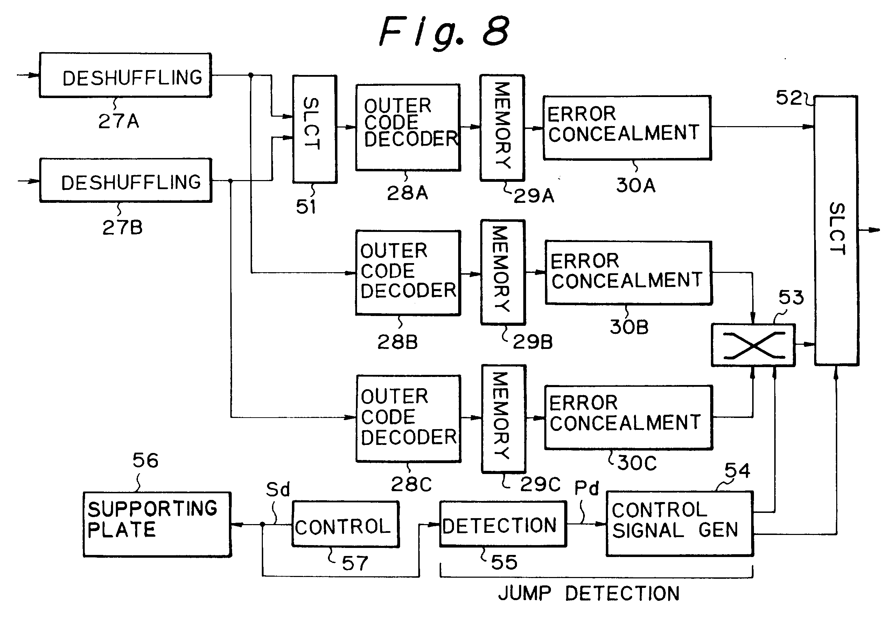

Fig. 8 shows a processing circuit for an audio data applicable at the time of variable speed reproduction. 27A and 27B show deshuffling circuits, respectively. Reproduced data at which the reproduction outputs of the head chips HA and HC lie alternately is supplied to one deshuffling circuit 27A, while reproduced data at which the reproduction outputs of the head chips HB and HD lie alternately is supplied to the other deshuffling circuit 27B. The output signals of the deshuffling circuits 27A and 27B are fed to an outer code encoder 28A through a selector 51. In addition, the output signals of the deshuffling circuits 27A and 27B are supplied to outer code decoders 28B and 28C.

The selector 51 selects data having no error in the first copy and the second copy by referring to an error flag generated in an inner code decoder to constitute a code block of outer codes. The outer code decoder 28A decodes the output data of the selector 51. The decoded output of the outer code decoder 28A is given to an error concealment circuit 30A through a memory 29A. The output signal of the error concealment circuit 30A is supplied to a selector 52.

Data decoded at the decoders 28B and 28C respectively is fed to a cross fader 53 through memories 29B, 29C and error concealment circuits 30B and 30C. The output signal of the cross fader 53 is supplied to the selector 52. The signal selected at the selector 52 is given to the analog/digital interface 31 (refer to Fig. 2). Control signals are supplied from a control signal generator 54 to the selector 52 and the cross fader 53. A detection pulse Pd is given to the control signal generator 54 from a detector 55.

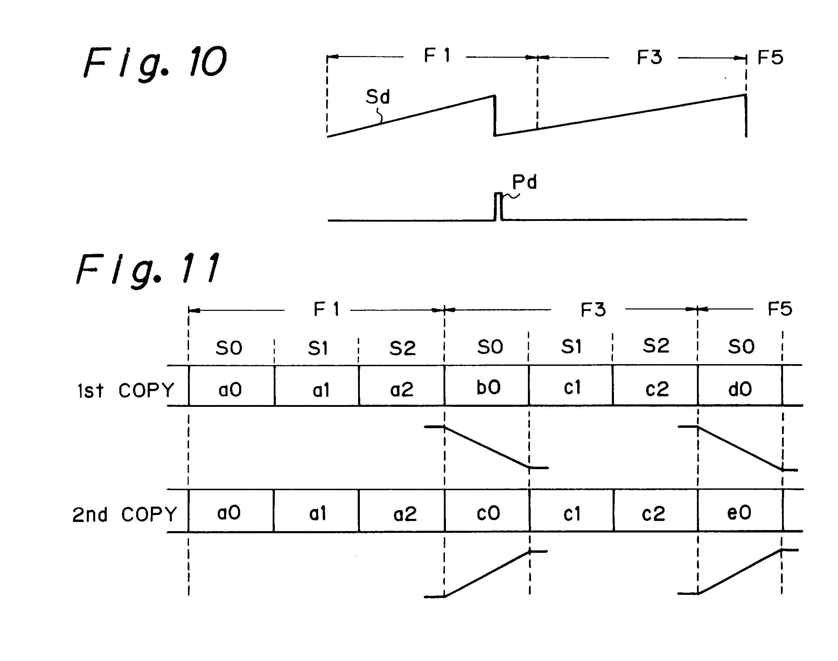

A driving signal Sd for dynamic tracking is given from a controller 57 to a head supporting plate 56. The detector 55 detects a track jump from the driving signal Sd. Fig. 10 shows a detection operation for the track jump. A sawtooth-like driving signal Sd is given to the supporting plate of the head chips HA and HC at the time of double speed reproduction shown in Fig. 7. The field F1 is reproduced, and a track jump occurs to go to the reproduction of the field F3. Since the level of the driving signal Sd varies abruptly at the time of the track jump, the detection pulse Pd is formed based on the change. For accurate detection of the track jump, the detection pulse Pd is generated only when the change of the driving signal Sd is equal to or greater than a predetermined level. The start timing of the cross fader is determined by the detection pulse Pd, and the control signal to the selector 52 is formed by the pulse Pd.

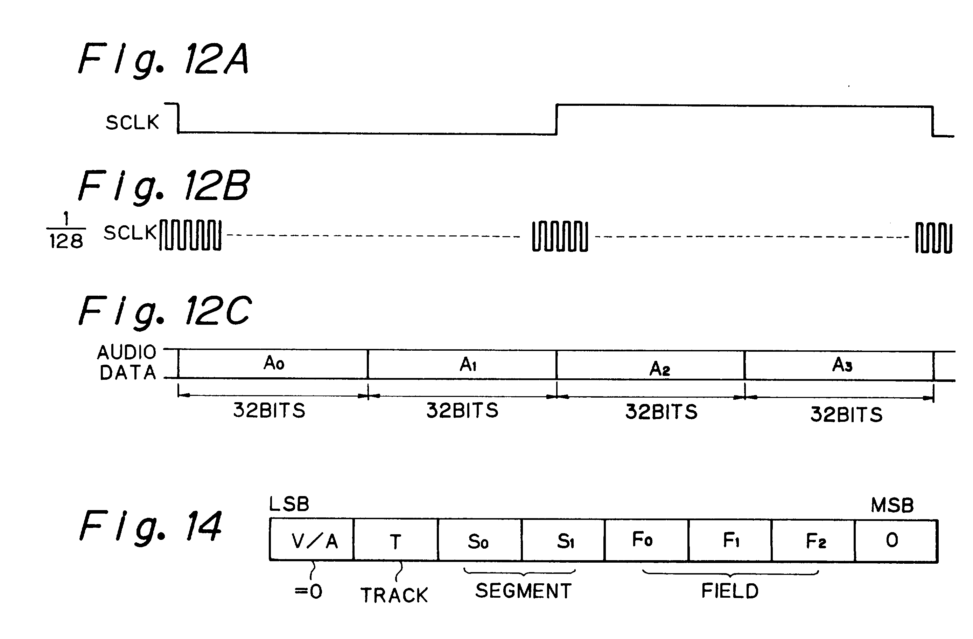

As shown in Fig. 11, the first copy and the second copy of a reproduced audio data are provided from the error concealment circuits 30B and 30C. Fig. 11 shows only the audio signal (decoded output of the audio selector A0) of a first channel because of simplicity, and a0, a1 and a2 mean reproduced data of each segment of the field F1; b0, b1 and b2 mean reproduced data of each segment of the field F1; c0, c1 and c2 mean reproduced data of each segment of the field F3; and d0, d1 and d2 mean reproduced data of each segment of the field F4; and e0, e1 and e2 mean reproduced data of each segment of the field F5.

At the time of the double speed reproduction, the field F1 is reproduced with dynamic tracking, a jump is then made for the tracks of the field F2, and the field F3 is reproduced. The audio data b0 of the segment S0 of the field F1 is provided as the first copy. However, because of the track jump, the second copy is the audio data c0 of the segment 50 of the field F3. When the track jump is made from the field F3 to a field F5, the audio data of the first copy of the segment 50 of the field F5 is the data d0 of a field F4.

The cross fader 53 operates in a period of a segment where audio data of the first copy and the second copy are different, and each sample of the audio data of the first copy is multiplied by coefficients which are gradually decreased, while each sample of the audio data of the second copy is multiplied by coefficients which are gradually increased.

The selector 52 selects the output of the error concealment circuit 30A in a period where the audio data of the first and second copies are the same, and selects the output of the cross fader 53 in a period where these are different, that is, in the operation period of the cross fader 53.

For the switching process in the period in which a track jump occurs, such processing as a muting process for a discontinuous portion after outputting either the first or the second copy or a concealing process of the discontinuous portion can be employed without being limited to the cross fade. The cross fading process has an advantage that sound is smoothly coupled at the field switching point.

### E. Another embodiment

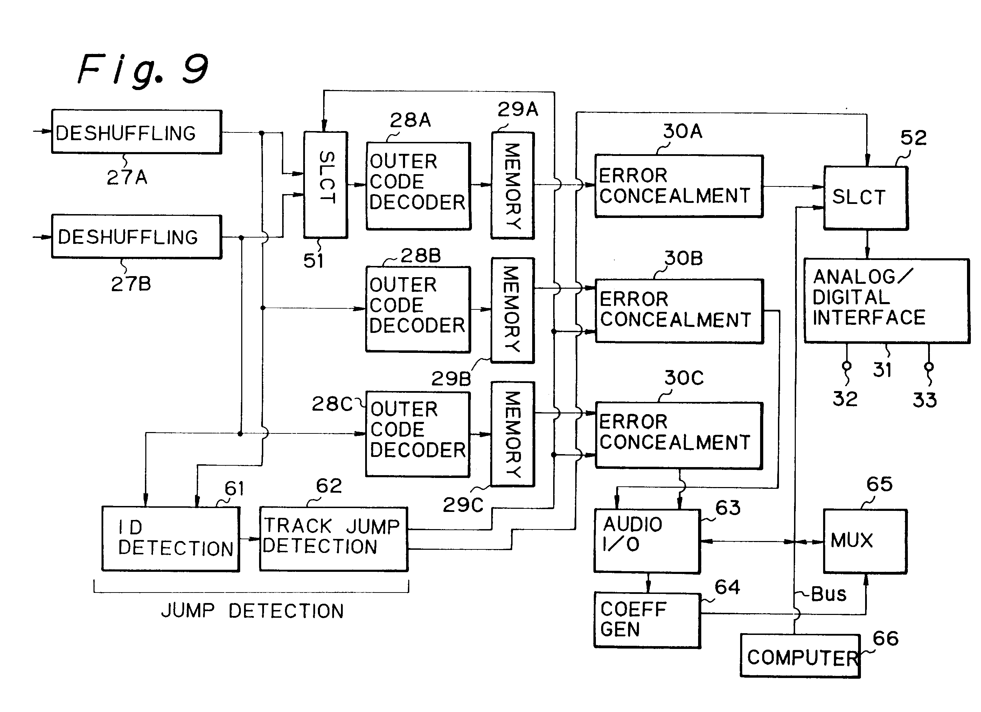

Another emvodiment of this invention will be described referring to Fig. 9. In the above embodiment, the detection of a track jump is performed based on the driving signal Sd which is provided to a head chip supporting plate. In another embodiment which is explained below, the detection of track jump is performed based on an ID signal in a sync block. In Fig. 9, the same reference numerals are used to the corresponding portions of Fig. 8.

In Fig. 9, 61 is an ID detector which detects an ID signal from the audio signals of deshuffling circuits 27A and 27B and supplies it to a track jump detector 62. The track jump detector 62 detects whether the ID signals of the first and second copies from the ID detector 61 coincide with each other and whether the ID signal of the audio signal of the first copy coincides with the ID signal of the audio signal prior to the digital audio signal of the first copy. The detector 62 supplies flag control signals to error concealment circuits 30B and 30C depending on the detection state and gives selection signals to selectors 51 and 52 when it detects a track jump.

63 is an audio I/0 circuit and supplies audio signals of the first and second copies from the error concealment circuits 30B and 30C to a bus Bus consisting of a data bus, an address bus and a control bus. The I/0 circuit supplies flag signals of the audio signals of the first and second copies to a coefficient signal generator 64. The coefficient signal generator 64 generates a coefficient signal depending on a flag signal from the audio I/0 circuit 63 and supplies the coefficient signal thus generated to a multiplexer 65. The multiplexer 65 performs a multiplication of the audio signal of the first or second copy from the audio I/0 circuit 63 and the coefficient signal from the coefficient signal generator 64. The multiplied first or second digital audio signal is supplied to an analog/digital interface 31 through the selector 52.

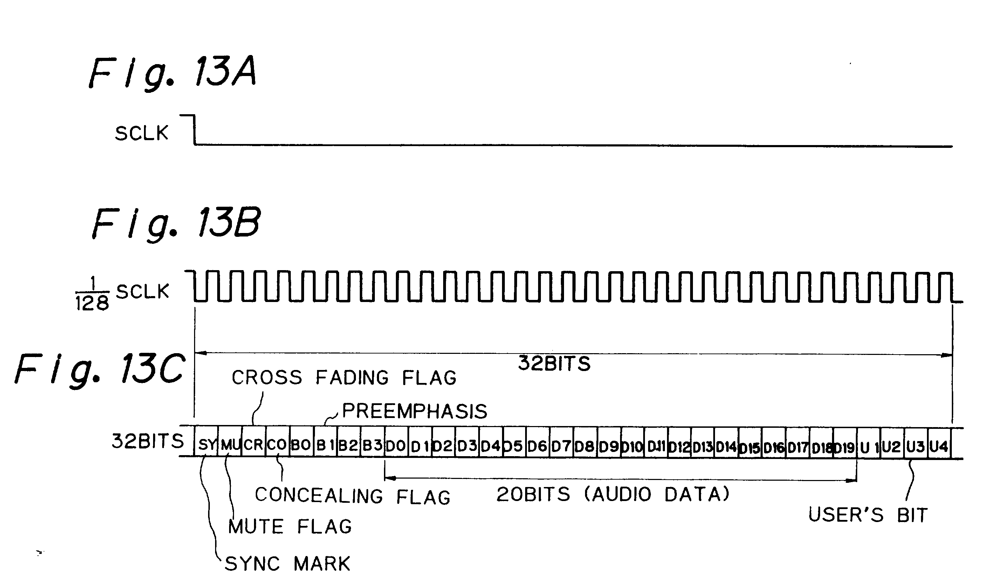

A format of the digital audio signal will now be described with reference to Figs. 12 and 13. Fig. 12A shows a sampling clock SCLK of 48 kHz, Fig. 12B shows a bit clock 1/128 SCLK with a period of 1/128 of the sampling clock, and Fig. 12C shows a audio signal. A0 to A3 of the audio signal of Fig. 12C indicate each one sample of the four audio sectors A0 to A3 of Figs. 8A and 8C which were explained in the previous embodiment, i.e., the digital audio signals of the four channels.

One sample of the audio signal of each audio sector A0 to A3 has 32-bit data. Figs. 13A, 13B and 13C are diagrams illustrated by expanding the time base of Figs. 12A, 12B and 12C. Fig. 13C indicates one sample of the digital audio signal of one sector within the audio sectors A0 to A3. SY is a sync mark for the synchronization with other devices. MU is a mute flag and is brought to, for example, "1" by the flag control signal from the track jump detector 62, at the error concealment circuits 30B and 30C, respectively. CR is a cross fading flag and is brought to, for example, "1" by the flag control signal from the track jump detector 62, at the error concealment circuits 30B and 30C, respectively. CO is a concealment flag and is brought to "1", for example, by the outer code encoders 28A, 28B and 28c when concealment is needed at the error concealment circuits 30A, 30B and 30C. B0 to B3 are preemphasis, U1 to U4 are users bits, and D0 to D19 are audio data.

A sector ID signal will now be described referring to Fig. 14.

As explained with respect to Fig. 5, the ID signal has a two-byte length. One of the two bytes is alloted to a sync block number, while the remaining one byte is the sector ID shown in Fig. 14. The first bit, i.e., V/A bit of the sector SD indicates an identification between a video sync block and an audio sync block, and the track number of the two tracks to be recorded is written into the second bit, i.e., T bit. The third and fourth bits, i.e., S0 and S1 indicate segments, and the fifth, sixth and seventh bits, i.e., F0, F1 and F2 bits indicate fields.

The track jump detector 62 detects whether the above-mentioned sector ID signal, i.e., the ID signal of the digital audio signal of the first copy coincides with the ID signal of the digital audio signal of the second copy and whether the ID signal of the digital audio signal of the first copy is continuous to the ID signal of the digital audio signal of the first or second copy reproduced immediately before the digital audio signal of the first copy. By flag control signals depending on the detection result, each flag (mute flag MU and cross fading flag CR) of the digital audio signal of the first and second copies of the error concealment circuits 30B and 30C is brought to, for example, "1".

The detection state of the track jump detector 62 and the processing depending on the state will now be described. First, when both of the signals of the first and second copies are reproduced, when the ID signals of the audio signals of the first and second copies coincide with each other and when the ID signal of the audio signal of the first copy is continuous to the ID signal of the audio signal of the first or second copy reproduced immediately before the audio signal of the first copy, it is assumed that no track jump of the DT head takes place. A control signal is supplied to the selector 52, and the digital audio signal of the second copy from the error concealment circuit 30A is given to the analog/digital interface 31.

Further, when both of the ID signals of the audio signals of the first and second copies are reproduced, when the ID signals of the audio signals of the first and second copies coincide with each other and when the ID signal of the audio signal of the first copy is not continuous to the ID signal of the audio signal of the first or second copy reproduced immediately before the audio signal of the first copy, it is assumed that a track jump has been done. By the supply of a flag control signal to the error concealment circuit 30C, the mute flag MU of the second audio signal is brought to "1".

Next, when the ID signals of the audio signals of the first and second copies do not coincide with each other and when the ID signal of the audio signal of the first copy is continuous to the ID signal of the audio signal of the first or second copy reproduced immediately before the audio signal of the first copy, it is assumed that a track jump has taken place. A flag control signal is given to the error concealment circuit 30C, and the cross fading flag CR is brought to "1".

Further, when the ID signals of the audio signals of the first and second copies do not coincide with each other and when the ID signal of the digital audio signal of the first copy is continuous to the ID signal of the digital audio signal of the first or second copy reproduced immediately before the audio signal of the first copy, it is assumed that a track jump has occurred. A flag control signal is supplied to the error concealment circuit 30C, and the mute flag MU of the audio signal of the second copy is brougth to "1".

Next, when only the ID signal of one audio signal is obtained from the ID signals of the audio signals of the first and second copies and when the provided ID signal of the audio signal of the first or second copy is continuous to the ID signal of the audio signal of the first or second copy reproduced immediately before the reproduction of the audio signal of the first or second copy from which the ID signal is provided as mentioned above, it is assumed that no track jump occurs. A selection signal is given to the selector 52, and the audio signal of the second copy from the concealment circuit 30A is supplied to the analog/digital interface 31.

Further, in the case where only one of the ID signals of the digital audio signals of the first and second copies is obtained, when the ID signal of the digital audio signal of the first or second copy is continuous to the ID signal of the digital audio signal of the first or second copy reproduced immediately before the reproduction of the digital audio signal of the first or second copy with the ID signal provided, it is assumed that a track jump has taken place. A flag control signal is consequently supplied to the error concealment circuit 30B and 30C, and the mute flag MU of the audio signal of the first or second copy is brought to "1".

Next, when neither of the ID signals of the digital audio signals of the first and second copies is provided, a flag control signal is supplied to the error concealment circuit 30C so that the mute flag MU and the cross fading flag CR of the digital audio signal of the second copy are brought to "1", respectively.

The mute flag MU or the cross fading flag CR of the audio signal of the first or second copy fed to the audio I/0 circuit 63 is detected. For example, when the mute flag MU is "1" and the cross fading flag CR is "0" or "1", one sample of the digital audio signal shown in Fig. 13C is muted. When the mute flag MU is "0" and the cross fading flag CR is "1", coefficients which gradually decrease are multiplied by the digital audio signal of the fist copy, and coefficients which gradually increase are multiplied by the audio signal of the second copy so as to carry out cross fading.

Further, when both of the mute flag MU and the cross fading flag CR are "1", the audio signals A0 to A3 of one segment described with respect to Fig. 12 are muted. When both of the mute flag MU and the cross fading flag CR are "0", the digital audio signal is not supplied to the bus Bus.

## Claims

1. A digital information signal reproducing apparatus having a rotary head (42) for reproducing digital signals from sequentially arranged tracks on a recording medium (43), having a first, normal speed reproduction mode in which said recording medium (43) is driven at a normal speed for reproducing a first pair of digital audio signals each of which has the same contents and is recorded on a respective one of two oblique tracks which are close to each other on said recording medium (43) and a second, variable speed reproduction mode in which the recording medium is run at a speed different from said normal speed,
**characterized by**
head position control means (56, 57) for controlling a scanning position of said rotary head (42) so that the latter scans said tracks during said second variable speed reproduction mode for causing said rotary head (42) to periodically jump over a plurality of the tracks such that at each head jump a second pair of digital audio signals each including different data are consequently generated in place of said first pair of digital audio signals;
whereby one signal of said second pair of digital audio signals corresponds to a signal of the said first pair of digital audio signals which would have been generated if no head jump had occurred,
detecting means (55, 62) for detecting when said rotary head (42) controlled by said head position control means (56, 57) jumps over a plurality of said tracks; and
processing means (53, 54) for switching from said one signal of said second pair of digital audio signals to the other one signal of said second pair of digital audio signals upon initiation by a detection signal (Pd) of said detecting means (55; 62), thereby generating the said digital signals reproduced by said apparatus.

2. A digital information signal reproducing apparatus according to claim 1, said detecting means (55;62) comprising: level detecting means for detecting a level change of a driving signal for said head position control means; and control signal generating means for generating a control signal of said processing means based on an output of said level detecting means.

3. A digital information signal reproducing apparatus according to claim 2, wherein said processing means performs cross fading process (53) of the first digital audio signal and the second digital audio signal based on an output of said control signal generating means.

4. A digital information signal reproducing apparatus according to claim 1, said detecting means comprising: identification signal detecting means (61) for detecting an identification signal of a data block of the first digital audio signal and the second audio signal; and track jump detecting means (62) for detecting the state of the jump of said rotary head (43) based on an output of said identification signal detecting means (61).

5. A digital information signal reproducing apparatus according to claim 4, wherein said processing means (51,52) performs switching process corresponding to the state of the jump based on said track jump detecting means (62).

6. A digital information signal reproducing apparatus according to claim 5, wherein said processing means has, at least, a mode performing cross fading and a mode performing muting, as processing mode of the first digital audio signal and the second digital audio signal, and performs one of the modes based on the output of said track jump detecting means (62).

## Patentansprüche

1. Gerät zur Wiedergabe von digitalen Informationssignalen mit einem rotierenden Magnetkopf (42) zur Wiedergabe von digitalen Signalen von aufeinanderfolgend angeordneten Spuren auf einem Aufzeichnungsträger (43), mit einer ersten Wiedergabebetriebsart für normale Bandgeschwindigkeit, bei der der Aufzeichnungsträger (43) mit normaler Geschwindigkeit angetrieben wird, um ein erstes Paar von digitalen Audiosignalen wiederzugeben, von denen jedes den gleichen Inhalt hat und auf einer entsprechenden von zwei einander nahegelegenen Schrägspuren auf dem Aufzeichnungsträger (43) aufgezeichnet ist, und einer zweiten Wiedergabebetriebsart für variable Bandgeschwindigkeiten, bei der der Aufkeichnungsträger mit einer von der normalen Bandgeschwindigkeit unterschiedlichen Bandgeschwindigkeit betrieben wird,
**gekennzeichnet durch**
Kopfposition-Steuermittel (56, 57) zur Steuerung einer Abtastposition des rotierenden Magnetkopfes (42), so daß letzterer die Spuren während der zweiten Wiedergabebetriebsart für variable Bandgeschwindigkeiten abtastet, wobei der rotierende magnetkopf (42) periodisch mehrere Spuren überspringt, so daß folglich bei jedem Kopfsprung ein zweites jeweils unterschiedliche Daten enthaltendes Paar von digitalen Audiosignalen anstelle des ersten Paares von digitalen Audiosignalen erzeugt wird,
wobei ein Signal des zweiten Paares von digitalen Audiosignalen einem Signal des ersten Paares von digitalen Audiosignalen entspricht, welche erzeugt worden wären, wenn kein Kopfsprung stattgefunden hätte;
Detektormittel (55, 62) zum Erfassen, wenn der durch die Kopfposition-Steuerrnittel (56, 57) gesteuerte rotierende Magnetkopf (42) mehrere Spuren überspringt; und
Verarbeitungsmittel (53, 54) zum Schalten von einem Signal des zweiten Paares von digitalen Audiosignalen zum anderen Signal des zweiten Paares von digitalen Audiosignalen aufgrund eines Detektionssignales (Pd) der Detektormittel (55; 62), wobei die durch das Gerät wiedergegebenen digitalen Signale erzeugt werden.

2. Gerät zur Wiedergabe von digitalen Informationssignalen nach Anspruch 1, wobei die Detektormittel (55; 62) aufweisen:
Pegeldetektormittel zur Erfassung einer Pegeländerung eines Antriebssignales für die Kopfposition-Steuermittel; und
Steuersignalerzeugungsmittel zur Erzeugung eines Steuersignales der Verarbeitungsmittel, basierend auf einem Ausgangssignal der Pegeldetektormittel.

3. Gerät zur Wiedergabe von digitalen Informationssignalen nach Anspruch 2, wobei die Verarbeitungsmittel einen Überblendvorgang (53) des ersten digitalen Audiosignales und des zweiten digitalen Audiosignales, basierend auf einem Ausgangssignal der Steuersignalerzeugungsmittel ausführen.

4. Gerät zur Wiedergabe von digitalen Informationssignalen nach Anspruch 1, wobei die Detektormittel aufweisen:
Identifikationssignal-Detektormittel (61) zur Erfassung eines Identifikationssignales eines Datenblockes des ersten digitalen Audiosignales und des zweiten digitalen Audiosignales; und Spursprung-Detektormittel (62) zur Erfassung des Sprungzustandes des rotierenden Magnetkopfes (43), basierend auf einem Ausgangssignal der Identifikationssignal-Detektormittel (61).

5. Gerät zur Wiedergabe von digitalen Informationssignalen nach Anspruch 4, wobei die Verarbeitungsmittel (51, 52) einen Schaltvorgang entsprechend dem Sprungzustand, basierend auf den Spursprung-Detektormitteln (62) ausführen.

6. Gerät zur Wiedergabe von digitalen Informationssignalen nach Anspruch 5, wobei das Verarbeitungsmittel mindestens eine Betriebsart zum Überblenden und eine Betriebsart zum Dämpfen als Verfahrensbetriebsart des ersten digitalen Audiosignales und des zweiten digitalen Audiosignales haben und eine der Betriebsarten basierend auf dem Ausgangssignal des Spursprung-Detektormittels (62) ausführt.

## Revendications

1. Appareil de reproduction de signaux d'information numérique possédant une tête rotative (42) pour reproduire des signaux numériques à partir de pistes disposées séquentiellement sur un support d'enregistrement (43), possédant un premier mode de reproduction à vitesse normale dans lequel ledit support d'enregistrement (43) est entraîné à une vitesse normale pour reproduire une première paire de signaux audio numériques dont chacun possède le même contenu et est enregistré sur l'une respective de deux pistes obliques qui sont proches l'une de l'autre sur ledit support d'enregistrement (43) et un second mode de reproduction à vitesse variable dans lequel le support d'enregistrement défile à une vitesse différente de ladite vitesse normale,
caractérisé par
des moyens de commande de position de tête (56, 57) pour contrôler une position d'analyse de ladite tête rotative (42) de telle sorte que celle-ci explore lesdites pistes durant ledit second mode de reproduction à vitesse variable pour amener ladite tête rotative (42) à sauter périodiquement une pluralité de pistes de telle sorte qu'à chaque saut de tête, une seconde paire de signaux audio numériques comprenant chacune des données différentes sont successivement générés à la place de ladite première paire de signaux audio numériques;
de telle sorte qu'un signal de ladite seconde paire de signaux audio numériques correspond à un signal de ladite première paire de signaux audio numériques qui aurait été généré si aucun saut de tête ne s'était produit,
des moyens de détection (55, 62) pour détecter lorsque ladite tête rotative (42) commandée par lesdits moyens de contrôle de position de tête (56, 57) saute une pluralité desdites pistes; et
des moyens de traitement (53, 54) pour commuter dudit premier signal de ladite seconde paire de signaux audio numériques à l'autre signal de ladite seconde paire de signaux audio numériques lors du déclenchement par un signal de détection (Pd) desdits moyens de détection (55, 62), générant ainsi lesdits signaux numériques reproduits par ledit appareil.

2. Appareil de reproduction de signaux d'information numérique selon la revendication 1, lesdits moyens de détection (55; 62) comportant : des moyens de détection de niveau pour détecter une variation de niveau d'un signal d'excitation provenant desdits moyens de commande de position de tête; et des moyens de génération d'un signal de commande pour générer un signal de commande desdits moyens de traitement en fonction d'un signal de sortie desdits moyens de détection de niveau.

3. Appareil de reproduction de signaux d'information numérique selon la revendication 2, dans lesquels lesdits moyens de traitement effectuent une opération de fondu enchaîné (53) du premier signal audio numérique et du second signal audio numérique en fonction d'un signal de sortie desdits moyens de génération de signaux de commande.

4. Appareil de reproduction de signaux d'information numérique selon la revendication 1, lesdits moyens de détection comportant : des moyens de détection de signal d'identification (61) pour détecter un signal d'identification d'un bloc de données du premier signal audio numérique et du second signal audio; et des moyens de détection de saut de piste (62) pour détecter l'état du saut de ladite tête rotative (43) en fonction d'un signal de sortie desdits moyens de détection de signal d'identification (61).

5. Appareil de reproduction de signaux d'information numérique selon la revendication 4, dans lequel lesdits moyens de traitement (51, 52) effectuent une opération de commutation correspondant à l'état du saut en fonction desdits moyens de détection de saut de piste (62).

6. Appareil de reproduction de signaux d'information numérique selon la revendication 5, dans lequel lesdits moyens de traitement possèdent, au moins, un mode effectuant un fondu enchaîné et un mode effectuant une atténuation, en tant que mode de traitement du premier signal audio numérique et du second signal audio numérique, et effectuent l'un des modes en fonction du signal de sortie desdits moyens de détection de saut de piste (62).
